(19) Europäisches Patentamt
European Patent Office
Office européen des brevets

(11) EP 4 349 900 B1

(12) EUROPEAN PATENT SPECIFICATION

(45) Date of publication and mention of the grant of the patent:
**08.04.2026 Bulletin 2026/15**

(21) Application number: **21944241.5**

(22) Date of filing: **01.12.2021**

(51) International Patent Classification (IPC):
***C08L 7/00*** (2006.01) ***B60C 1/00*** (2006.01)
***C08J 5/04*** (2006.01) ***C08J 9/04*** (2006.01)
***C08K 3/04*** (2006.01) ***C08K 3/36*** (2006.01)
***C08K 5/053*** (2006.01) ***C08K 5/1535*** (2006.01)
***C08K 5/1545*** (2006.01) ***C08K 7/02*** (2006.01)
***C08L 9/06*** (2006.01) ***C08L 15/00*** (2006.01)

(52) Cooperative Patent Classification (CPC):
(C-Sets available)
**C08J 9/0023; B60C 1/0016; C08J 9/0061; C08J 9/0066; C08L 7/00;** B60C 2200/04; B60C 2200/06; C08J 9/0085; C08J 9/0095; C08J 9/08; C08J 9/107; C08J 2201/026; C08J 2203/02; C08J 2203/04; C08J 2307/00;
(Cont.)

(86) International application number:
**PCT/JP2021/044162**

(87) International publication number:
**WO 2022/254749 (08.12.2022 Gazette 2022/49)**

(54) **VULCANIZED RUBBER COMPOSITION AND TIRE**

VULKANISIERTE KAUTSCHUKZUSAMMENSETZUNG UND REIFEN

COMPOSITION DE CAOUTCHOUC VULCANISÉE ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2021 JP 2021091890**

(43) Date of publication of application:
**10.04.2024 Bulletin 2024/15**

(73) Proprietor: **BRIDGESTONE CORPORATION**
**Chuo-ku**
**Tokyo 104-8340 (JP)**

(72) Inventors:
- **OGIWARA Akiko**
**Tokyo 104-8340 (JP)**
- **OGAWA Kentaro**
**Tokyo 104-8340 (JP)**
- **YOSHIHARA Taiga**
**Tokyo 104-8340 (JP)**
- **SUZUKI Kenji**
**Tokyo 104-8340 (JP)**

(74) Representative: **Marks & Clerk LLP**
**15 Fetter Lane**
**London EC4A 1BW (GB)**

(56) References cited:
**EP-A1- 3 456 772** **EP-A1- 3 495 162**
**WO-A1-2019/216109** **WO-A1-2019/216110**
**WO-A1-2020/100627** **WO-A1-2020/100628**
**JP-A- 2010 215 854** **JP-A- 2011 184 634**
**JP-A- 2017 002 152** **JP-A- 2017 203 118**
**JP-A- 2020 019 862** **JP-A- H09 194 640**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C08J 2309/06; C08J 2407/00; C08J 2409/00;
C08J 2409/06; Y02T 10/86

C-Sets
**C08L 7/00, C08L 9/00, C08L 15/00, C08K 5/17, C08K 3/04, C08K 3/36, C08K 5/053, C08K 7/02;**
**C08L 7/00, C08L 15/00, C08K 5/17, C08K 3/04, C08K 3/36, C08K 5/053, C08K 7/02**

## Description

TECHNICAL FIELD

This disclosure relates to a vulcanized rubber composition and a tire.

BACKGROUND

In recent years, pneumatic tires using foam rubber in a tread portion are manufactured and sold in the field of pneumatic tires, and these pneumatic tires are applied to studless tires that specialize in on-ice performance. Further, to reduce the fuel consumption of automobiles and the like, there has been a demand for weight reduction of members using rubber compositions such as tires.

JP 2014-172379 A (PTL 1) describes a technique of providing a tire with excellent steering stability and wear resistance by using a specific tire vulcanizing mold.

However, the technique described in PTL 1 cannot provide sufficient wear resistance, cut resistance, and other properties under severe conditions, and further improvement has been desired considering its application to rubber articles such as tires.

PTL 2 relates to a rubber composition comprising: a cyclic polyol compound having a hydrocarbyl group and a hydroxy group and having two or more and ten or less cyclic structures; carbon black; and a rubber component.

PTL 3 relates to a pneumatic tire.

CITATION LIST

Patent Literature

PTL 1: JP 2014-172379 A
PTL 2: EP 3 456 772 A1
PTL 3: EP 3 495 162 A1

SUMMARY

(Technical Problem)

It could thus be helpful to provide a vulcanized rubber composition having good on-ice performance and excellent wear resistance. It could also be helpful to provide a tire with excellent on-ice performance and wear resistance.

(Solution to Problem)

We have conducted intensive studies in improving on-ice performance and wear resistance. We found that, by forming a plurality of pores in a vulcanized rubber composition, it is possible to enhance the on-ice performance, and by containing a small amount of a cyclic polyol compound having a hydrocarbyl group in a rubber composition containing natural rubber as a rubber component, it is possible to enhance the strength of rubber, thereby improving the wear resistance.

That is, the vulcanized rubber composition of the present disclosure is a vulcanized rubber composition obtained by vulcanizing a rubber composition containing a rubber component containing natural rubber and a cyclic polyol compound having a hydrocarbyl group, where the vulcanized rubber composition has a plurality of pores having an average diameter of about 1 μm to 500 μm formed in the vulcanized rubber composition, wherein the diameter of the pore is the largest diameter of the pore or, if the pore is not spherical, the maximum distance between any two points on the inner wall of the pore, wherein the average diameter of the pores is an average value of the diameters of the pores in the vulcanized rubber composition of the present disclosure, and the average value of the diameters of all pores in one 2.5 mm × 2.5 mm field of view is obtained by a cross section of the vulcanized rubber composition observed using a "VHX-100" digital microscope manufactured by Keyence Corporation, wherein a content of the cyclic polyol compound having a hydrocarbyl group is 0.1 parts by mass to 5 parts by mass with respect to 100 parts by mass of the natural rubber, and wherein the vulcanized rubber composition has a pore ratio of 5 % to 45 %.

With this structure, it is possible to realize excellent wear resistance while having good on-ice performance.

The tire of the present disclosure uses the above-described vulcanized rubber composition in a tread portion.

With this structure, it is possible to realize excellent on-ice performance and wear resistance.

(Advantageous Effect)

According to the present disclosure, it is possible to provide a vulcanized rubber composition having good on-ice performance and excellent wear resistance. Further, according to the present disclosure, it is possible to provide a tire with excellent on-ice performance and wear resistance.

BRIEF DESCRIPTION OF THE DRAWINGS

In the accompanying drawings:

FIG. 1 schematically illustrates a plurality of pores in a vulcanized rubber composition according to an embodiment of the present disclosure; and
FIG. 2 schematically illustrates a cross section of a pore in a vulcanized rubber composition according to an embodiment of the present disclosure.

DETAILED DESCRIPTION

Embodiments of the present disclosure will be described below using the drawings in accordance with need.

<Vulcanized rubber composition>

The vulcanized rubber composition of the present disclosure is a vulcanized rubber composition obtained by vulcanizing a rubber composition containing a rubber component containing natural rubber and a cyclic polyol compound having a hydrocarbyl group, where the vulcanized rubber composition 10 has a plurality of pores 20 as illustrated in FIG. 1.

The cyclic polyol compound having a hydrocarbyl group contained in the rubber composition of the vulcanized rubber composition of the present disclosure can increase the rubber strength and improve the wear resistance and the cut resistance of the vulcanized rubber composition.

The vulcanized rubber composition 10 of the present disclosure contains the above-described cyclic polyol compound having a hydrocarbyl group and has a plurality of pores 20 as illustrated in FIG. 1. Therefore, when it is applied to a tire, the on-ice performance can be improved, and the conventional problem that wear tends to occur can also be solved.

The pores in the vulcanized rubber composition of the present disclosure are a plurality of pores having an average diameter of about 1 $\mu$m to 500 $\mu$m formed in the vulcanized rubber composition, as illustrated in FIG. 1. The diameter of the pore is, as illustrated in FIG. 2, the largest diameter D of the pore 20 (if the pore is not spherical, it is the maximum distance D among the distances between any two points on the inner wall of the pore).

The average diameter of the pores is an average value of the diameters D of the pores 20 in the vulcanized rubber composition of the present disclosure. In the present disclosure, a cross section of the vulcanized rubber composition is observed using a digital microscope ("VHX-100" manufactured by Keyence Corporation), and the average value of the diameters of all pores in one field of view (2.5 mm $\times$ 2.5 mm) is obtained. In the vulcanized rubber composition of the present disclosure, the shape and size of the pore do not vary greatly in one vulcanized rubber composition, so that the average value of the pores in one field of view can be taken as the average diameter of the pores.

The pore ratio of the vulcanized rubber composition of the present disclosure is 5 % to 45 %. By setting the lower limit of the pore ratio to 5 %, the on-ice performance can be more reliably improved. From the same point of view, the pore ratio is preferably 7 % or more and more preferably 15 % or more. On the other hand, by setting the upper limit of the pore ratio to 45 %, a decrease in wear resistance can be more reliably suppressed even when there is a plurality of pores. From the same point of view, the pore ratio is preferably 40 % or less and more preferably 37 % or less.

The pore ratio is a ratio (% by volume) of the volume of the pores in the vulcanized rubber composition of the present disclosure. The method of measuring the pore ratio is not particularly limited, and the pore ratio can be measured using, for example, a densimeter (ViBRA densimeter "DMA-220" manufactured by SHINKO DENSHI CO., LTD.).

The vulcanized rubber composition of the present disclosure has a plurality of pores, but a method of providing the pores is not particularly limited. The pores can be formed with known techniques depending on the conditions of the pores, equipment for producing the vulcanized rubber composition, and the like.

Examples thereof include a method of providing pores in the vulcanized rubber composition by blending a foaming agent, a foaming aid, a composite fiber, and the like in the rubber composition before vulcanization, as will be described later. Note that the pore ratio can be controlled by changing the vulcanization conditions or the content of a pore introducing agent such as a foaming agent or a composite fiber.

The vulcanized rubber composition is a vulcanized rubber obtained by vulcanizing an unvulcanized rubber

composition. The vulcanization conditions (temperature and time) are not particularly limited, and the vulcanization treatment can be performed under any condition depending on the required performance.

The unvulcanized rubber composition (hereinafter simply referred to as "rubber composition"), which is the basis of the vulcanized rubber composition of the present disclosure, will be described below.

The rubber composition contains a rubber component containing natural rubber and a cyclic polyol compound having a hydrocarbyl group.

The following describes each component of the rubber composition.

(Rubber component)

The rubber component contained in the rubber composition contains at least natural rubber (NR). By containing natural rubber in the rubber component, it is possible to obtain excellent cut resistance, reinforcing properties, wear resistance, and other properties when it is used together with a cyclic polyol compound having a hydrocarbyl group, which will be described later.

The content of the natural rubber in the rubber component is not particularly limited. For example, from the viewpoint of further improving the wear resistance, the content of the natural rubber is preferably 30 % by mass or more of the rubber component. In this case, the cut resistance and the wear resistance can be more reliably improved when it is used together with a cyclic polyol compound having a hydrocarbyl group, which will be described later. From the same point of view, the content of the natural rubber in the rubber component is preferably 35 % by mass or more and more preferably 40 % by mass or more. The upper limit is preferably 100 % by mass or less, more preferably 90 % by mass or less, and still more preferably 80 % by mass or less.

The rubber component may contain any synthetic rubber in addition to the natural rubber.

For example, the rubber component preferably contains a diene-based synthetic rubber from the viewpoint of obtaining excellent cut resistance and wear resistance.

Examples of the diene-based synthetic rubber include synthetic polyisoprene (IR), styrene-butadiene copolymer rubber (SBR), and polybutadiene rubber (BR). The diene-based synthetic rubber may be contained alone or in combination of two or more in the rubber component. The rubber component may contain a non-diene-based synthetic rubber depending on the required performance.

The rubber component preferably further contains a conjugated diene-based polymer having a functional group. When the rubber component contains a conjugated diene-based polymer having a functional group, the dispersibility of a filler, which will be described later, can be improved, thereby realizing better wear resistance and on-ice performance.

The functional group of the conjugated diene-based polymer having a functional group is not particularly limited, and it may be appropriately selected according to the type of filler and the required performance. Examples of the functional group include functional groups having at least one element selected from nitrogen, silicon, oxygen, and tin.

Examples of the functional group include an amino group, an imino group, an amide group, an isocyanate group, a silyl group, an alkoxy group, an alkoxysilyl group, an epoxy group, a glycidyl group, and a carbonyl group.

A method of introducing a specific functional group into the conjugated diene-based polymer is not particularly limited, and the functional group may be introduced with a known method according to the required performance.

(Cyclic polyol compound having hydrocarbyl group)

The rubber composition further contains a cyclic polyol compound having a hydrocarbyl group in addition to the rubber component described above.

The cyclic polyol compound having a hydrocarbyl group contained in the rubber composition can greatly improve the wear resistance and the cut resistance of the vulcanized rubber composition of the present disclosure. Further, it enhances the interaction between the rubber molecules of the rubber component and an agent to be described later, so that the physical properties of the rubber after cross-linking can be homogenized. As a result, the reinforcing properties can be improved.

It has been found that the rubber composition having pores of the present disclosure has improved wear resistance and cut resistance.

Furthermore, the cyclic polyol compound having a hydrocarbyl group has fewer hydrophilic sites than a compound such as sorbitol, which can suppress self-aggregation in the rubber composition. As a result, the elongation fatigue resistance of the vulcanized rubber composition can be maintained satisfactorily.

The content of the cyclic polyol compound having a hydrocarbyl group is 0.1 parts by mass to 5 parts by mass with respect to 100 parts by mass of the natural rubber. When the content of the cyclic polyol compound having a hydrocarbyl group is 0.1 parts by mass or more with respect to 100 parts by mass of the natural rubber, the wear resistance can be sufficiently improved. On the other hand, when the content of the cyclic polyol compound having a hydrocarbyl group is 5 parts by mass or less with respect to 100 parts by mass of the natural rubber, self-aggregation in the rubber composition

can be reliably suppressed, and the elongation fatigue resistance can be further improved.

From the same point of view, the content of the cyclic polyol compound having a hydrocarbyl group is preferably 0.1 parts by mass to 3 parts by mass and more preferably 0.3 parts by mass to 2.5 parts by mass with respect to 100 parts by mass of the natural rubber.

From the viewpoint of improving the wear resistance and the cut resistance, the cyclic polyol compound having a hydrocarbyl group is preferably dispersed in the rubber component, and it is more preferably dispersed in the natural rubber.

The cyclic polyol compound having a hydrocarbyl group does not act as a surfactant for other compounding agents, but is dispersed in rubber to improve the wear resistance and the cut resistance. Therefore, it is distinguished from a surfactant.

The cyclic polyol compound having a hydrocarbyl group preferably has two or more hydroxyl groups, and it preferably has three or more hydroxyl groups. This is because, by having many hydroxyl groups, the interaction between the rubber component and additives is more strongly exhibited, thereby realizing better wear resistance and cut resistance. On the other hand, from the viewpoint of suppressing self-aggregation in rubber due to a large number of hydrophilic sites, it is preferable to have five or less hydroxyl groups and more preferable to have four or less hydroxyl groups.

The cyclic polyol compound having a hydrocarbyl group is preferably a cyclic polyol compound having a hydrocarbyl ester group. In this case, better wear resistance and cut resistance can be realized.

From the viewpoint of realizing better wear resistance and cut resistance, the cyclic polyol compound having a hydrocarbyl group is more preferably a compound represented by the following formula (1).

[Chem. 1]

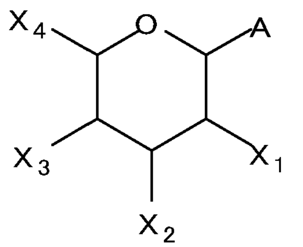

· · ·(1)

In the above formula (1), A is a hydrocarbyl ester group having 6 to 30 carbon atoms or a hydrocarbyl ether group having 6 to 30 carbon atoms, and the number of carbon atoms of the hydrocarbyl group portion of A is preferably 12 to 24. When the number of carbon atoms of the hydrocarbyl group portion of A in the formula (1) is in a range of 12 to 24, the wear resistance and the cut resistance are further improved while maintaining good elongation fatigue resistance.

For A in the formula (1), the first atom from the ring portion (that is, the atom bonded to the ring) or the second atom from the ring portion is preferably an oxygen atom. Examples of A in which the first atom from the ring portion is an oxygen atom include groups represented by -O-A' and -O-CO-A", and examples of A in which the second atom from the ring portion is an oxygen atom include groups represented by $-CH_2$-O-A" and $-CH_2$-O-CO-A‴, where A' is preferably a hydrocarbyl group having 6 to 30 carbon atoms, A" is preferably a hydrocarbyl group having 5 to 29 carbon atoms, A‴ is preferably a hydrocarbyl group having 4 to 28 carbon atoms, and A', A" and A‴ are more preferably hydrocarbyl groups having 12 to 24 carbon atoms.

In the formula (1), $X_1$, $X_2$, $X_3$ and $X_4$ are each independently -OH or - R (where -R is -H or $-CH_2OH$), provided that at least two of $X_1$, $X_2$, $X_3$ and $X_4$ are -OH. When two or more of $X_1$, $X_2$, $X_3$ and $X_4$, or preferably three or more of $X_1$, $X_2$, $X_3$ and $X_4$ are -OH, the wear resistance and the cut resistance of the rubber composition are further improved.

Among the compounds represented by the above formula (1), a compound represented by the following formula (2) or formula (3) is more preferable, and a compound represented by the formula (2) is particularly preferable.

[Chem. 2]

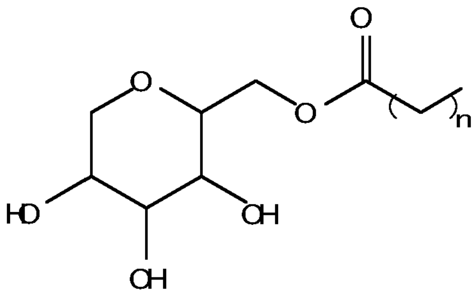

・・・(2)

[Chem. 3]

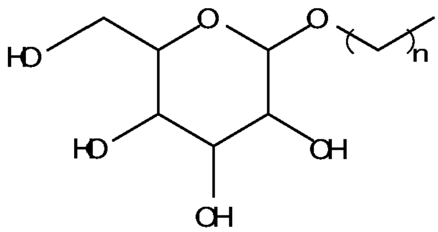

・・・(3)

In the formulas (2) and (3), n is a natural number, which is preferably in a range of 11 to 23.

By blending the compound represented by the formula (2) or formula (3) as the modified cyclic polyol compound, the wear resistance can be further improved.

The cyclic polyol compound having a hydrocarbyl group is not particularly limited. For example, it can be obtained by reacting a polyol compound, such as sorbitol, sorbitan, glucose and fructose, with an aliphatic alcohol, such as octanol, decanol, dodecanol, tetradecanol and hexadecanol, or an aliphatic carboxylic acid, such as lauric acid, myristic acid, palmitic acid, stearic acid and oleic acid.

Specific examples of the cyclic polyol compound having a hydrocarbyl group include ester compounds such as sorbitan monolaurate, sorbitan monomyristate, sorbitan monopalmitate, sorbitan monostearate and sorbitan monooleate, and ether compounds such as octyl-β-D-glucopyranoside, decyl-β-D-glucopyranoside, dodecyl-β-D-glucopyranoside, tetradecyl-β-D-glucopyranoside and hexadecyl-β-D-glucopyranoside. These compounds may be used alone or in combination of two or more.

From the viewpoint of realizing both elongation fatigue resistance and cut resistance at a higher level, the cyclic polyol compound having a hydrocarbyl group is preferably sorbitan monostearate (sorbitan monoester) among these compounds.

The melting point of the cyclic polyol compound having a hydrocarbyl group is preferably 40 °C to 100 °C and more preferably 45 °C to 90 °C. This is because, when the melting point of the cyclic polyol compound having a hydrocarbyl group is 100 °C or lower, the solubility during kneading and vulcanization reaction can be improved, and when the melting point is 40 °C or higher, the cut resistance at high temperatures can be improved.

(Filler)

In addition to the rubber component and the cyclic polyol compound described above, the rubber composition preferably further contains a filler containing at least one selected from the group consisting of silica and carbon black.

By containing a filler containing at least one selected from the group consisting of silica and carbon black together with the rubber component, the properties of the vulcanized rubber composition, such as wear resistance and on-ice performance, can be further improved.

Examples of the type of the silica include wet silica (hydrous silicic acid), dry silica (anhydrous silicic acid), calcium silicate, and aluminum silicate, among which wet silica is preferred. These silicas may be used alone or in combination of two or more.

The wet silica may be precipitated silica. The precipitated silica is silica obtained by aggregating primary particles by, at an initial stage of production, advancing the reaction of a reaction solution in a relatively high temperature and neutral to alkaline pH range to grow silica primary particles and then controlling them to acidic pH range.

The silica is not particularly limited, where, for example, the CTAB specific surface area (cetyltrimethylammonium bromide adsorption specific surface area) may be 70 $m^2/g$ or more and 250 $m^2/g$ or less. The CTAB specific surface area refers to a value measured according to ASTM D3765-92. The CTAB specific surface area is obtained by assuming an adsorption cross sectional area of one molecule of cetyltrimethylammonium bromide (CTAB) on a silica surface to be 0.35

$nm^2$ and calculating a specific surface area ($m^2/g$) based on an adsorbed amount of CTAB.

The BET specific surface area of the silica may be 100 $m^2/g$ or more and 250 $m^2/g$ or less. The BET specific surface area refers to a specific surface area determined with the BET method, and it can be measured according to ASTM D4820-93 in the present disclosure.

The content of the silica is preferably 5 parts by mass to 100 parts by mass, more preferably 10 parts by mass to 50 parts by mass, and still more preferably 10 parts by mass to 45 parts by mass with respect to 100 parts by mass of the rubber component. When the content of the silica is 5 parts by mass or more with respect to 100 parts by mass of the rubber component, the wear resistance and the on-ice performance of the vulcanized rubber composition can be further improved. When the content is 100 parts by mass or less with respect to 100 parts by mass of the rubber component, the deterioration of processability and low rolling resistance of the rubber composition can be suppressed.

The carbon black is not particularly limited, and examples thereof include GPF, FEF, HAF, N339, IISAF, ISAF, and SAF grade carbon black. Among these, ISAF and SAF grade carbon black is preferred from the viewpoint of improving the wear resistance of the rubber composition. These carbon black products may be used alone or in combination of two or more.

It is possible to use carbon black with a nitrogen adsorption specific surface area ($N_2SA$, measured according to JIS K 6217-2:2001) of 20 $m^2/g$ to 250 $m^2/g$, or carbon black with a nitrogen adsorption specific surface area of 30 $m^2/g$ to 200 $m^2/g$, or carbon black with a nitrogen adsorption specific surface area of 30 $m^2/g$ to 150 $m^2/g$ as the carbon black.

Further, it is possible to use carbon black with a dibutyl phthalate (DBP) oil absorption (measured with the method described in JIS K 6217-4: 2001 "Determination of DBP absorption") of 50 $cm^3/100$ g to 200 $cm^3/100$ g, or carbon black with a DBP oil absorption of 60 $cm^3/100$ g to 150 $cm^3/100$ g as the carbon black.

The content of the carbon black is not particularly limited. It is preferably 5 parts by mass to 100 parts by mass, more preferably 20 parts by mass to 80 parts by mass, still more preferably 25 parts by mass to 70 parts by mass, and particularly preferably 30 parts by mass to 65 parts by mass with respect to 100 parts by mass of the rubber component. When the content of the carbon black is 5 parts by mass or more with respect to 100 parts by mass of the rubber component, the wear resistance can be further improved. When the content of the carbon black is less than 50 parts by mass with respect to 100 parts by mass of the rubber component, deterioration of the low heat generating properties can be suppressed more reliably.

The content of the carbon black is not particularly limited, but the content of the carbon black with respect to the content of the silica (content of carbon black/content of silica) is preferably 0.1 to 15, more preferably 0.5 to 1.5, and still more preferably 0.7 to 1.2 in terms of mass ratio. As other preferable examples, it is preferably 4 to 15 and more preferably 7 to 13.

When the content of the carbon black with respect to the content of the silica is 0.1 or more in mass ratio, it is possible to obtain better wear resistance and reinforcing properties. When the content of the carbon black with respect to the content of the silica is 15 or less in mass ratio, it is possible to obtain better cut resistance without deteriorating low heat generating properties.

In addition to the above-described silica and carbon black, the filler may also contain an inorganic compound represented by the following general formula (XX),

$$nM\cdot xSiO_y\cdot zH_2O \qquad (XX)$$

(where M is at least one selected from metal selected from the group consisting of aluminum, magnesium, titanium, calcium and zirconium, oxides or hydroxides of these metals, hydrates thereof, and carbonates of these metals; and n, x, y and z are an integer of 1 to 5, an integer of 0 to 10, an integer of 2 to 5, and an integer of 0 to 10, respectively.)

Examples of the inorganic compound of the general formula (XX) include alumina ($Al_2O_3$) such as $\gamma$-alumina and $\alpha$-alumina; alumina monohydrate ($Al_2O_3\cdot H_2O$) such as boehmite and diaspore; aluminum hydroxide [$Al(OH)_3$] such as gibbsite and bayerite; aluminum carbonate [$Al_2(CO_3)_3$], magnesium hydroxide [$Mg(OH)_2$], magnesium oxide (MgO), magnesium carbonate ($MgCO_3$), talc ($3MgO\cdot 4SiO_2\cdot H_2O$), attapulgite ($5MgO\cdot 8SiO_2\cdot 9H_2O$), titanium white ($TiO_2$), titanium black ($TiO_{2n-1}$), calcium oxide (CaO), calcium hydroxide [$Ca(OH)_2$], aluminum oxide magnesium ($MgO\cdot Al_2O_3$), clay ($Al_2O_3\cdot 2SiO_2$), kaolin ($Al_2O_3\cdot 2SiO_2\cdot 2H_2O$), pyrophyllite ($Al_2O_3\cdot 4SiO_2\cdot H_2O$), bentonite ($Al_2O_3\cdot 4SiO_2\cdot 2H_2O$), aluminum silicate ($Al_2SiO_5$, $Al_4\cdot 3SiO_4\cdot 5H_2O$, etc.), magnesium silicate ($Mg_2SiO_4$, $MgSiO_3$, etc.), calcium silicate ($Ca_2SiO_4$, etc.), aluminum calcium silicate ($Al_2O_3\cdot CaO\cdot 2SiO_2$, etc.), calcium magnesium silicate ($CaMgSiO_4$), calcium carbonate ($CaCO_3$), zirconium oxide ($ZrO_2$), zirconium hydroxide [$ZrO(OH)_2\cdot nH_2O$], zirconium carbonate [$Zr(CO_3)_2$], and crystalline aluminosilicate containing hydrogen, alkali metal or alkaline earth metal that corrects the charge like various zeolites.

From the viewpoint of the balance between wear resistance and wet performance, the inorganic compound of the general formula (XX) preferably has an average particle diameter of 0.01 $\mu$m to 10 $\mu$m and more preferably an average particle diameter of 0.05 $\mu$m to 5 $\mu$m.

The total content of the filler is not particularly limited, but it is preferably 20 parts by mass to 150 parts by mass, more preferably 30 parts by mass to 120 parts by mass, and particularly preferably 40 parts by mass to 100 parts by mass

with respect to 100 parts by mass of the rubber component. This is because, by optimizing the amount of the filler, the properties of a tire such as wear resistance, cut resistance and low loss properties, for example, can be further improved.

(Pore introducing agent)

The rubber composition preferably further contains a pore introducing agent. When the rubber composition contains a pore introducing agent, the vulcanized rubber has pores on the surface or inside, or on the surface and inside. As a result, a tire using the vulcanized rubber has flexibility and easily adheres to an icy road surface, and water on the road surface is sucked into the pores on the tire surface and is easily removed from an icy and snowy road surface, which can improve the braking performance on ice.

Examples of the pore introducing agent include a foaming agent, a metal sulfate, a thermally expandable microcapsule, porous cellulose particles, and a lignin derivative. These pore introducing agents may be used alone or in combination of two or more. It is preferable to use the foaming agent from the viewpoint of on-ice performance.

The content of the pore introducing agent in the rubber composition is not particularly limited, but it is preferably 0.1 parts by mass to 20 parts by mass, more preferably 0.3 parts by mass to 10 parts by mass, and still more preferably 0.5 parts by mass to 5 parts by mass with respect to 100 parts by mass of the rubber component, from the viewpoints of obtaining a desired pore ratio and maintaining the wear resistance and other properties.

The content ratio of the pore introducing agent and the cyclic polyol compound having a hydrocarbyl group is not particularly limited. However, from the viewpoint of improving wear resistance and on-ice performance, the mass ratio of the pore introducing agent and the cyclic polyol compound having a hydrocarbyl group (pore introducing agent/cyclic polyol compound having a hydrocarbyl group) is preferably 0.5 to 10, more preferably 1 to 8, still more preferably 2 to 7, and particularly preferably 3 to 7.

- Foaming agent

When the rubber composition contains a foaming agent as the pore introducing agent, bubbles are formed in the vulcanized rubber because of the foaming agent during vulcanization of the rubber composition, and the vulcanized rubber is made into a foamed rubber. Since the foamed rubber has flexibility, a tire surface using the vulcanized rubber easily adheres to an icy road surface. In addition, the bubbles create holes (foaming pores) derived from bubbles on the surface of the vulcanized rubber and the surface of the tire, which function as channels for draining water.

Specific examples of the foaming agent include azodicarbonamide (ADCA), dinitrosopentamethylenetetramine (DPT), dinitrosopentastyrenetetramine, benzenesulfonyl hydrazide derivatives, p,p'-oxybisbenzenesulfonyl hydrazide (OBSH), carbonates such as ammonium carbonate, sodium carbonate and potassium carbonate, bicarbonates (hydrogencarbonates) such as ammonium bicarbonate, sodium bicarbonate and potassium bicarbonate, other inorganic foaming agents, nitrososulfonyl azo compounds that generate nitrogen, N,N'-dimethyl-N,N'-dinitrosophthalamide, toluenesulfonyl hydrazide, p-toluenesulfonyl semicarbazide, and p,p'-oxybisbenzenesulfonyl semicarbazide. Among these, azodicarbonamide (ADCA), dinitrosopentamethylenetetramine (DPT), and an inorganic foaming agent are preferably used from the viewpoint of manufacturability. These foaming agents may be used alone or in combination of two or more.

The content of the foaming agent in the rubber composition is not particularly limited, but it is preferably 1 part by mass to 10 parts by mass and more preferably 2 parts by mass to 8 parts by mass with respect to 100 parts by mass of the rubber component.

The rubber composition may further use urea, zinc stearate, zinc benzenesulfinate, zinc white, or the like as a foaming aid. These may be used alone or in combination of two or more. By using a foaming aid together, the foaming reaction can be accelerated, the degree of completion of the reaction can be increased, and unnecessary deterioration over time can be suppressed.

- Metal sulfate

When the rubber composition contains a metal sulfate as the pore introducing agent, the metal sulfate protrudes from a tire surface obtained by vulcanizing the rubber composition and functions as a claw without the disadvantage of being abrasive. Subsequently, the metal sulfate gradually gets out of the rubber matrix to create pores, and the pores serve as storage and passageways for draining the water film on an icy surface. Under these conditions, the contact between the tire surface (for example, the surface of a tread) and the ice loses lubrication, which improves the coefficient of friction. Examples of the metal sulfate include magnesium sulfate.

The metal sulfate is preferably micrometer-sized particles. Specifically, the average particle size and the median particle size (both expressed in mass) are preferably 1 μm to 1 mm, and the median particle size is more preferably 2 μm to 800 μm.

When the average particle size and the median particle size are 1 μm or more, it is easy to obtain the desired

technical effects (that is, formation of suitable fine roughness). When the average particle size and the median particle size are 1 mm or less, especially in a case of using the rubber composition in a tread, deterioration in aesthetics is suppressed (the appearance of too obvious particles on the tread surface can be suppressed), and the gripping performance on melting ice is hardly deteriorated.

For all of these reasons, the median particle size of the metal sulfate is preferably 2 μm to 500 μm and more preferably 5 μm to 200 μm. This particularly preferred particle size range appears to correspond to the optimum compromise between the desired surface roughness on the one hand, and good contact of the rubber composition with ice on the other hand.

For the same reasons as described above, the content of the metal sulfate in the rubber composition is preferably 5 parts by mass to 40 parts by mass and more preferably 10 parts by mass to 35 parts by mass with respect to 100 parts by mass of the rubber component.

For example, various known methods by laser diffraction (see, for example, the standard ISO-8130-13 or the standard JIS K5600-9-3) may be used to analyze the particle size and calculate the median particle size of the microparticles (or the average diameter of the microparticles assumed to be substantially spherical).

Particle size analysis by mechanical sieving may be easily and preferably used, where the operation includes sieving a defined amount (for example, 200 g) of sample on a vibrating table with sieves with different diameters (for example, with meshes of 1000 μm, 800 μm, 630 μm, 500 μm, 400 μm, ... 100 μm, 80 μm, and 63 μm according to a progressive rate equal to 1.26) for 30 minutes; weighing the collected oversize particles of each sieve on a precision balance; estimating the percentage of the oversize particles of each mesh diameter with respect to the total mass of the material based on the weighing result; and finally calculating the median particle size (or median diameter) or the average particle size (or average diameter) based on the histogram of the particle size distribution with a known method.

- Thermally expandable microcapsule

The thermally expandable microcapsule includes a shell material made of a thermoplastic resin and a thermally expandable substance enclosed in the shell material. The shell material of the thermally expandable microcapsule may be made of a nitrile-based polymer.

The thermally expandable substance enclosed in the shell material of the microcapsule has the property of vaporizing or expanding due to heat, and it may be, for example, at least one selected from the group consisting of hydrocarbons such as isoalkane and normal alkane. Examples of the isoalkane include isobutane, isopentane, 2-methylpentane, 2-methylhexane, and 2,2,4-trimethylpentane, and examples of the normal alkane include n-butane, n-propane, n-hexane, n-heptane, and n-octane. Each of these hydrocarbons may be used alone or in combination. A preferred form of the thermally expandable material is a substance in which a hydrocarbon that is gas at room temperature is dissolved in a hydrocarbon that is liquid at room temperature. By using such a mixture of hydrocarbons, it is possible to obtain a sufficient expansion force from a low-temperature range to a high-temperature range in the vulcanization molding temperature range (150 °C to 190 °C) of an unvulcanized tire.

Examples of such a thermally expandable microcapsule include product names "EXPANCEL 091DU-80" and "EXPANCEL 092DU-120" manufactured by Expancel in Sweden, and product names "Matsumoto Microsphere F-85D" and "Matsumoto Microsphere F-100D" manufactured by Matsumoto Yushi-Seiyaku Co., Ltd.

The content of the thermally expandable microcapsule in the rubber composition is preferably 0.1 parts by mass to 10 parts by mass and more preferably 0.5 parts by mass to 5 parts by mass with respect to 100 parts by mass of the rubber component.

- Porous cellulose particle

When the rubber composition contains porous cellulose particles as the pore introducing agent and when the porous cellulose particles are exposed on a tire surface obtained by vulcanizing the rubber composition, water on an icy and snowy road surface is absorbed by the porous cellulose particles, thereby removing the water between the tire and the road surface. Further, the presence of cellulose, which is a polysaccharide, causes interaction between the tire and water on the icy and snowy road surface, which can further enhance the interaction between the tire and the water due to modified polyoxyalkylene glycol.

The porous cellulose particles are cellulose particles having a porous structure with a porosity of 75 % to 95 %. When they are blended in the rubber composition, the on-ice performance can be remarkably improved. When the porosity of the porous cellulose particles is 75 % or more, it is possible to obtain excellent on-ice performance-improving effects. When the porosity is 95 % or less, the strength of the particles can be improved. The porosity is more preferably 80 % to 90 %.

The porosity of the porous cellulose particles can be determined with the following equation by measuring the volume of a sample (that is, porous cellulose particles) of a certain mass with a graduated cylinder and determining the bulk

specific gravity.

Porosity [%] = {1-(bulk specific gravity of sample [g/ml])/(true specific gravity of sample [g/ml])}x100

As used herein, the true specific gravity of cellulose is 1.5.

The particle diameter of the porous cellulose particles is not particularly limited, but the average particle diameter of the porous cellulose particles is preferably 1000 μm or less from the viewpoint of wear resistance. The lower limit of the average particle diameter is not particularly limited, but it is preferably 5 μm or more. The average particle diameter is more preferably 100 μm to 800 μm and still more preferably 200 μm to 800 μm.

Spherical particles whose ratio of major axis/minor axis is 1 to 2 are preferably used as the porous cellulose particles. The use of particles with such a spherical structure improves the dispersibility in the rubber composition and contributes to the improvement of on-ice performance and the maintenance of wear resistance and other properties. The ratio of major axis/minor axis is more preferably 1.0 to 1.5.

The average particle diameter of the porous cellulose particles and the ratio of major axis/minor axis are determined as follows. An image is obtained by observing the porous cellulose particles with a microscope, and the major axis and the minor axis (if the major axis and the minor axis are the same, the length in the direction of one axis and the length in the direction of an axis perpendicular to the one axis) of 100 particles are measured using this image. The average value of the 100 particles is calculated to obtain the average particle diameter, and the average of values obtained by dividing the major axis by the minor axis is calculated to obtain the ratio of major axis/minor axis.

The porous cellulose particles are commercially available as "Viscopearl" manufactured by Rengo Co., Ltd., and those described in JP 2001-323095 A, JP 2004-115284 A, and the like can also be suitably used. The content of the porous cellulose particles in the rubber composition is preferably 0.3 parts by mass to 20 parts by mass with respect to 100 parts by mass of the rubber component. When the content is 0.3 parts by mass or more, the effect of improving on-ice performance can be increased. When the content is 20 parts by mass or less, it is possible to prevent a too high rubber hardness and to prevent deterioration of wear resistance. The content of the porous cellulose particles is more preferably 1 part by weight to 15 parts by weight, and it is still more preferably 3 parts by mass to 15 parts by mass.

- Lignin derivative

When the rubber composition contains a lignin derivative as the pore introducing agent, the effect of improving on-ice performance can be increased.

Lignin sulfonate is preferably used as the lignin derivative. Examples of the lignin sulfonate include an alkali metal salt, an alkaline earth metal salt, an ammonium salt, and an alcohol amine salt of lignin sulfonic acid, and at least one of these can be contained and used. It is preferably an alkali metal salt and/or an alkaline earth metal salt of lignin sulfonic acid, and examples thereof include potassium salt, sodium salt, calcium salt, magnesium salt, lithium salt, barium salt, and a mixed salt of these.

(Foaming aid)

When the rubber composition contains a foaming agent as the pore introducing agent, it is preferable to further contain a foaming aid. Examples of the foaming aid include urea, zinc stearate, zinc benzenesulfinate, and zinc white. These foaming aids may be used alone or in combination of two or more.

By using the foaming aid together, the foaming reaction can be accelerated, the degree of completion of the reaction can be increased, and unnecessary deterioration over time can be suppressed.

The total content of the foaming agent and the foaming aid is preferably 1 part by mass to 30 parts by mass with respect to 100 parts by mass of the rubber component. When the total content of the foaming agent and the foaming aid is 1 part by mass or more, the rubber composition can be sufficiently foamed during vulcanization, and the foaming ratio of the vulcanized rubber can be maintained at a high level. On the other hand, even when the total content of the foaming agent and the foaming aid is 30 parts by mass or less, a decrease in the foaming ratio can be suppressed.

From the viewpoint of suppressing a decrease in the foaming ratio as described above, the total content of the foaming agent and the foaming aid is preferably 3 parts by mass or more and more preferably 5 parts by mass or more with respect to 100 parts by mass of the rubber component. Further, from the viewpoint of suppressing a decrease in the foaming ratio as described above, the total content of the foaming agent and the foaming aid is preferably 25 parts by mass or less and more preferably 20 parts by mass or less with respect to 100 parts by mass of the rubber component.

In the rubber composition, a mass ratio of the foaming agent and the foaming aid (foaming agent: foaming aid) is preferably 1: 1.1 to 1:3.3. When the mass ratio (foaming agent: foaming aid) is less than 1:1.1, the rubber composition may not be sufficiently foamed during vulcanization, and the foaming ratio of the vulcanized rubber may decrease. On the other hand, when the mass ratio (foaming agent: foaming aid) exceeds 1:3.3, the foaming ratio may decrease.

From the viewpoint of suppressing a decrease in the foaming ratio as described above, the mass ratio of the foaming agent and the foaming aid (foaming agent: foaming aid) is preferably 1:1.2 or more and more preferably 1:1.3 or more. Further, from the viewpoint of suppressing a decrease in the foaming ratio as described above, the mass ratio of the foaming agent and the foaming aid (foaming agent: foaming aid) is preferably 1:3.2 or less, more preferably 1:3.1 or less, still more preferably 1:2.9 or less, still more preferably 1:2.7 or less, still more preferably 1:2.5 or less, and particularly preferably 1:2.3 or less.

From the viewpoints of the foaming ratio of the vulcanized rubber and the on-ice performance of the tire, the content of the foaming aid is preferably in a range of 4 parts by mass to 14 parts by mass and more preferably in a range of 6 parts by mass to 14 parts by mass with respect to 100 parts by mass of the rubber component.

(Organic acid)

The rubber composition may contain an organic acid, if necessary. In this case, the SP value of the organic acid is preferably 9.15 $(cal/cm^3)^{1/2}$ to 16.0 $(cal/cm^3)^{1/2}$. The organic acid has effects of balancing the rate of the decomposition and foaming reaction of the foaming agent and the rate of the vulcanization reaction of the rubber composition during the vulcanization of the rubber composition, thereby improving the foaming ratio of the vulcanized rubber. Therefore, by blending the organic acid in the rubber composition, the decomposition and foaming reaction of the foaming agent can be accelerated while maintaining good workability of the rubber composition, and the rate of the decomposition and foaming reaction and the rate of the vulcanization reaction of the rubber composition can be balanced to improve the foaming ratio of the vulcanized rubber. By applying the rubber composition to a tire, the on-ice performance of the tire can be improved.

When the SP value of the organic acid is less than 9.15 $(cal/cm^3)^{1/2}$, the decomposition of the foaming agent may not be sufficiently accelerated. When the SP value of the organic acid exceeds 16.0 $(cal/cm^3)^{1/2}$, the adhesion of the rubber composition containing the organic acid increases, and the rubber composition may adhere to production equipment such as rolls during the production of the rubber composition, which deteriorates the workability of the rubber composition.

From the same point of view, the SP value of the organic acid is preferably 10.5 $(cal/cm^3)^{1/2}$ to 14.3 $(cal/cm^3)^{1/2}$. When the SP value of the organic acid is 10.5 $(cal/cm^3)^{1/2}$ or more, the effect of accelerating the decomposition of the foaming agent is further improved. When the SP value of the organic acid is 14.3 $(cal/cm^3)^{1/2}$ or less, the adhesion of the rubber composition containing the organic acid can be further reduced, and the workability of the rubber composition is further improved.

Stearic acid, which is commonly used as a vulcanization aid for the rubber composition, has an SP value of 9.12 $(cal/cm^3)^{1/2}$ and has a low effect of accelerating the decomposition of the foaming agent.

In the present specification, the SP value (solubility parameter) of the organic acid is calculated with the Fedors method.

The organic acid may be any of monocarboxylic acid, dicarboxylic acid, tricarboxylic acid, and the like, and it may be aliphatic or aromatic. Further, it may have a functional group other than a carboxyl group, such as a hydroxyl group, a ketone group, and an ethylenically unsaturated group.

The organic acid preferably has an aromatic ring (it is preferably aromatic), and it is preferably monocarboxylic acid. When the organic acid has an aromatic ring, the adhesion of the rubber composition can be further reduced, the workability of the rubber composition is further improved, and the rubber composition hardly adheres to production equipment such as rolls.

Examples of the aliphatic monocarboxylic acid include palmitic acid.

Examples of the aliphatic dicarboxylic acid include oxalic acid, malonic acid, succinic acid, glutaric acid, adipic acid, pimelic acid, suberic acid, azelaic acid, and sebacic acid.

Examples of the aromatic monocarboxylic acid include benzoic acid and salicylic acid.

Examples of the aromatic dicarboxylic acid include phthalic acid.

Examples of the organic acid having a functional group other than a carboxyl group include tartaric acid, malic acid, maleic acid, glycolic acid, and $\alpha$-ketoglutaric acid.

These organic acids may be used alone or in combination of two or more.

The organic acid is particularly preferably benzoic acid. When benzoic acid is blended in the rubber composition, the adhesion of the rubber composition can be further reduced, the workability of the rubber composition is further improved, and the rubber composition hardly adheres to production equipment such as rolls.

The content of the organic acid is preferably 0.1 parts by mass to 7 parts by mass, more preferably 1.5 parts by mass to 7 parts by mass, and still more preferably 3 parts by mass to 7 parts by mass with respect to 100 parts by mass of the rubber component, from the viewpoints of the workability of the rubber composition, the foaming ratio of the vulcanized rubber, and the on-ice performance of the tire.

The total content of the foaming agent and the organic acid is preferably 3 parts by mass or more and less than 15 parts by mass, more preferably 5 parts by mass or more and less than 15 parts by mass, and still more preferably 7 parts by mass or more and less than 15 parts by mass with respect to 100 parts by mass of the rubber component, from the

viewpoints of the foaming ratio of the vulcanized rubber and the on-ice performance of the tire.

The mass ratio of the foaming agent and the organic acid (foaming agent: organic acid) is preferably in a range of 1:0.5 to 1:1.5 and more preferably in a range of 1:0.7 to 1:1.3, from the viewpoints of the foaming ratio of the vulcanized rubber and the on-ice performance of the tire.

(Composite fiber)

The rubber composition preferably contains a composite fiber in addition to the above-described rubber component and cyclic polyol compound, and optional components such as a filler, a pore introducing agent and a foaming aid.

Containing the composite fiber can sufficiently ensure an affinity with water. Particularly when the rubber composition containing the composite fiber is used in a tire, excellent drainage properties and on-ice performance can be obtained.

The composite fiber is preferably made of a hydrophilic resin having a coating layer formed on the surface. This is because providing a coating layer on the surface of the composite fiber improves the dispersibility of the composite fiber in the rubber composition.

The hydrophilic resin is preferably insoluble in water. Using a water-insoluble hydrophilic resin can suppress dissolution of the composite fiber even when the composite fiber is exposed on the surface of a product (such as a tire).

The hydrophilic resin is not particularly limited if it is a resin having an affinity with water, that is, a resin having a hydrophilic group in a molecule. Specifically, it is preferably a resin containing an oxygen atom, a nitrogen atom or a sulfur atom, and examples thereof include a resin containing at least one group selected from the group consisting of -OH, -C(=O)OH, -OC(=O)R (where R is an alkyl group), -NH2, -NCO, and -SH. Among these groups, -OH, -C(=O)OH, -OC(=O)R, -NH2, and -NCO are preferred.

Specific examples of the hydrophilic resin include an ethylene-vinyl alcohol copolymer, a vinyl alcohol homopolymer, a poly (meth) acrylic acid resin or its ester resin (hereinafter, a copolymer containing a structural unit derived from (meth) acrylic acid and a (co)polymer containing a structural unit derived from (meth) acrylic acid ester are collectively referred to as a (meth) acrylic resin), a polyamide resin, a polyethylene glycol resin, a carboxy vinyl copolymer, a styrene-maleic acid copolymer, a polyvinylpyrrolidone resin, a vinylpyrrolidone-vinyl acetate copolymer, a polyester resin, and a cellulose-based resin. Among these, an ethylene-vinyl alcohol copolymer, a vinyl alcohol homopolymer, a poly (meth) acrylic acid resin, a polyamide resin, an aliphatic polyamide-based resin, an aromatic polyamide-based resin, a polyester resin, a polyvinyl alcohol-based resin, a cellulose-based resin, or a (meth) acrylic resin is preferred, and an ethylene-vinyl alcohol copolymer is more preferred.

It is preferable that the surface of the fiber made of the hydrophilic resin be formed with a coating layer having an affinity with a rubber component, where the coating layer is preferably made of a resin with a melting point lower than the maximum vulcanization temperature (hereinafter also referred to as "resin with a low melting point"). By forming such a coating layer, it is possible to exhibit good affinity with the rubber component in the vicinity of the composite fiber while effectively retaining the affinity with water possessed by the hydrophilic resin itself, and it is also possible to capture the hydrophilic resin which is hardly melted during vulcanization (during foaming) to accelerate the formation of pores inside the composite fiber. In other words, it is possible to sufficiently exhibit the effect of improving on-ice performance of the pores inside the composite fiber while ensuring good dispersion of the composite fiber in the rubber component to sufficiently exhibit the drainage properties provided by the hydrophilic resin. Further, such a resin with a low melting point is melted during vulcanization to form a flowable coating layer, which contributes to the adhesion of the rubber component to the composite fiber and provides good on-ice performance and wear resistance.

The thickness of the coating layer may vary depending on, for example, the blending amount of the hydrophilic resin and the average diameter of the composite fiber, but it is preferably 0.001 μm to 10 μm and more preferably 0.001 μm to 5 μm. By forming a coating layer with a thickness within the above ranges, the desired effects of the present disclosure can be sufficiently exhibited. The coating layer may be formed over the entire surface of the hydrophilic resin or may be formed on the surface of a part of the hydrophilic resin. Specifically, the coating layer is preferably formed so as to occupy at least 50 % of the total surface area of the hydrophilic resin.

Specifically, the resin with a low melting point used in the coating layer is preferably a resin in which the polar component is 50 % by mass or less of all components in the resin with a low melting point, and it is more preferably a polyolefin-based resin. When it is a resin in which the polar component is within the above range of all components, the SP value difference from the rubber component is moderate, and the melting point is suitably lower than the maximum vulcanization temperature. As a result, it can be easily melted during vulcanization to accelerate the foaming of the vulcanized rubber while sufficiently securing good affinity with the rubber component. Therefore, it is possible to reliably form pores inside the composite fiber while more reliably improving the dispersibility of the fiber made of the hydrophilic resin in the rubber composition.

The polyolefin-based resin may be branched, linear, or the like. The polyolefin-based resin may be an ionomer

resin in which molecules of an ethylene-methacrylic acid copolymer are crosslinked by metal ions. Specific examples of the polyolefin-based resin include polyethylene, polypropylene, polybutene, polystyrene, ethylene-propylene copolymer, ethylene-methacrylic acid copolymer, ethylene-ethyl acrylate copolymer, ethylene-propylene-diene terpolymer, ethylene-vinyl acetate copolymer, and ionomer resins thereof. These polyolefin-based resins may be used alone or in combination of two or more.

Among these, the polyolefin-based resin is preferably a polyethylene-based resin, a polypropylene-based resin, polyolefin ionomer, or maleic anhydride-modified α-polyolefin. When polyolefin ionomer or maleic anhydride-modified α-polyolefin is used, it also adheres to the hydroxyl group of the hydrophilic resin, which can further improve the rubber strength.

A method of blending these resins using a mixing mill, subjecting the mixture to melt spinning to form undrawn yarn, and thermally drawing the undrawn yarn to obtain a fibrous material may be adopted to produce the composite fiber made of a hydrophilic resin on which a coating layer made of the resin with a low melting point is formed. It is also possible to adopt a method of blending the resins using two twin-screw extruders equipped with a die and then obtaining a fibrous material in the same manner as described above. In this case, the hydrophilic resin and the resin with a low melting point are each simultaneously extruded from the two die outlets to form undrawn yarn. The amount of these resins to be added into a mixing mill or hopper may vary depending on the length and diameter of the composite (fiber) to be obtained. However, the amount of the resin with a low melting point is preferably 5 parts by mass to 300 parts by mass and more preferably 10 parts by mass to 150 parts by mass with respect to 100 parts by mass of the hydrophilic resin. By adding these resins in an amount within the above ranges, a coating layer capable of exhibiting desired effects is effectively formed on the surface of the composite (fiber) made of the hydrophilic resin obtained after the drawing process.

The average length of the obtained composite fiber is preferably 0.1 mm to 500 mm and more preferably 0.1 mm to 7 mm, and the average diameter of the obtained composite fiber is preferably 0.001 mm to 2 mm and more preferably 0.005 mm to 0.5 mm. When the average length and the average diameter are within the above ranges, the composite fiber will not be entangled with each other more than necessary, and the dispersibility will not be impaired. The aspect ratio is preferably 10 to 4000 and more preferably 50 to 2000. The aspect ratio means a ratio of the length to the diameter of the composite fiber.

For the obtained composite fiber, a ratio (A/B) of a length A of a cross section perpendicular to the length direction in the major axis direction and a length B of the cross section in the minor axis direction perpendicular to the major axis direction is preferably more than 1, more preferably 1.5 or more, still more preferably 1.8 or more, and particularly preferably 2.0 or more. The ratio A/B is preferably 20 or less, more preferably 15 or less, and particularly preferably 10 or less. When it is within the above ranges, the on-ice performance is further improved. The shape of the cross section is not particularly limited if A/B is more than 1, and it may be elliptical, rectangular, polygonal, or an indefinite shape.

The blending amount of the composite fiber made of the hydrophilic resin on which the coating layer is formed is preferably 0.1 parts by mass to 100 parts by mass, more preferably 0.3 parts by mass to 30 parts by mass, still more preferably 0.5 parts by mass to 10 parts by mass, and even more preferably 1 part by mass to 6 parts by mass with respect to 100 parts by mass of the rubber component. When the blending amount of the composite fiber made of the hydrophilic resin on which the coating layer is formed is within the above ranges, it is possible to maintain sufficient durability while exhibiting good drainage properties by forming pores inside the composite fiber.

The content ratio of the composite fiber and the cyclic polyol compound having a hydrocarbyl group is not particularly limited. However, from the viewpoint of improving wear resistance and on-ice performance, the mass ratio of the composite fiber and the cyclic polyol compound having a hydrocarbyl group (composite fiber/cyclic polyol compound having a hydrocarbyl group) is preferably 0.1 to 10, more preferably 0.5 to 8, still more preferably 1 to 6, and particularly preferably 1.5 to 5.

The content ratio of the composite fiber and the pore introducing agent is not particularly limited. However, from the viewpoint of achieving and improving both wear resistance and on-ice performance, the mass ratio of the composite fiber and the pore introducing agent (pore introducing agent/composite fiber) is preferably 0.5 to 10, more preferably 1 to 8, still more preferably 1.5 to 7, and particularly preferably 2 to 6.

(Other components)

In addition to the components described above, the rubber composition may contain compounding agents commonly used in the rubber industry as other components. Examples of the other component include a silane coupling agent, a vulcanizing agent, a vulcanization accelerator, polyethylene glycol, a softener, a resin, an age resistor, and zinc oxide, which may be appropriately selected and contained if the effects of the present disclosure are not impaired. Commercially available products may be suitably used as these compounding agents.

When silica is contained as the above-described filler, it is preferable to further contain a silane coupling agent. This is because the effects of silica in terms of cut resistance, reinforcing properties, and low loss properties can be further improved in this case. A known silane coupling agent may be appropriately used as the silane coupling agent.

Examples of the silane coupling agent include bis (3-triethoxysilylpropyl) polysulfide, bis (3-triethoxysilylpropyl) tetrasulfide, bis (3-triethoxysilylpropyl) trisulfide, bis (3-triethoxysilylpropyl) disulfide, bis (2-triethoxysilylethyl) tetrasulfide, bis (3-trimethoxysilylpropyl) tetrasulfide, bis (2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis (3-diethoxymethylsilylpropyl) tetrasulfide, 3-mercaptopropyldimethoxymethylsilane, dimethoxymethylsilylpropyl-N,N-dimethylthiocarbamoyltetrasulfide, and dimethoxymethylsilylpropylbenzothiazolyl tetrasulfide. These silane coupling agents may be used alone or in combination of two or more.

The content of the silane coupling agent varies depending on the type of the silane coupling agent and the like, but it is preferably 0.2 or less, more preferably 0.1 or less, and still more preferably 0.09 or less in mass ratio with respect to the content of the silica. This is because the cut resistance of the rubber composition can be further improved by reducing the content of the silane coupling agent to 0.2 or less in mass ratio with respect to the content of the silica.

The vulcanization accelerator may be a conventionally known one and is not particularly limited. Examples thereof include sulfenamide-based vulcanization accelerators such as CBS (N-cyclohexyl-2-benzothiadylsulfenamide), TBBS (N-t-butyl-2-benzothiadylsulfenamide) and TBSI (N-t-butyl-2-benzothiadylsulfenimide); guanidine-based vulcanization accelerators such as DPG (diphenylguanidine); thiuram-based vulcanization accelerators such as tetraoctylthiuram disulfide and tetrabenzylthiuram disulfide; and zinc dialkyldithiophosphate. The content is preferably less than the sulfur content, and more preferably about 1 part by mass to 10 parts by mass with respect to 100 parts by mass of the rubber component.

The rubber composition preferably further contains glycerol monostearate from the viewpoint of shortening the scorch time and further improving the operability such as increasing the vulcanization rate during tire production.

The content of the glycerol monostearate is 0.1 parts by mass or more, preferably 0.3 parts by mass or more, and more preferably 0.5 parts by mass or more with respect to 100 parts by mass of the rubber component. When the content is less than 0.1 parts by mass, the effects of the present disclosure may be unsatisfactory. The content is 3.5 parts by mass or less, preferably 3 parts by mass or less, and more preferably 2.5 parts by mass or less. When the content exceeds 3.5 parts by mass, the scorch time tends to be too short.

The content of the polyethylene glycol is 0.1 parts by mass or more, preferably 0.3 parts by mass or more, and more preferably 0.5 parts by mass or more with respect to 100 parts by mass of the rubber component. When the content is less than 0.1 parts by mass, the effects of the present disclosure may be unsatisfactory. The content is 3.5 parts by mass or less, preferably 3 parts by mass or less, and more preferably 2.5 parts by mass or less. When the content exceeds 3.5 parts by mass, the scorch time tends to be too short.

The rubber composition may also contain a softener from the viewpoint of increasing the flexibility of rubber and realizing better wet performance and on-ice performance. The softener may be a conventionally known one and is not particularly limited. Examples thereof include petroleum-based softeners such as aroma oil, paraffin oil and naphthenic oil, and plant-based softeners such as palm oil, castor oil, cottonseed oil, and soybean oil. These softeners may be appropriately selected and used, and they may be used alone or in combination of two or more.

When the softener is contained, it is preferable to contain one that is liquid at room temperature such as 25 °C among the above-described softeners from the viewpoint of ease of handling, and examples thereof include petroleum-based softeners such as aroma oil, paraffin oil and naphthenic oil.

The rubber composition may contain a resin from the viewpoint of increasing the flexibility of rubber and realizing better wet performance and on-ice performance. Various natural resins and synthetic resins can be used as the resin. Specifically, it is preferable to use a rosin-based resin, a terpene-based resin, a petroleum-based resin, a phenol-based resin, a coal-based resin, a xylene-based resin, or the like. These resins may be used alone or in combination of two or more.

A method of producing the rubber composition is not particularly limited. For example, the rubber composition may be obtained by blending and kneading the rubber component, the filler containing at least silica and the cyclic polyol compound having a hydrocarbyl group described above, and other optional components with a known method.

<Tire>

The tire of the present disclosure uses the vulcanized rubber composition of the present disclosure described above in a tread portion. By using the rubber composition in a tread portion, excellent wear resistance can be realized while maintaining good on-ice performance.

The tire of the present disclosure can be used, for example, as a tire for construction vehicles, a tire for trucks and buses, a tire for aircraft, or a tire for passenger vehicles, and it is particularly preferably used as a tire for passenger vehicles or a tire for trucks and buses. This is because the vulcanized rubber composition used as a material of tread portion has

excellent on-ice performance and wear resistance, and using it as a tire for passenger vehicles or a tire for trucks and buses brings considerable benefits.

When the vulcanized rubber composition of the present disclosure described above is used in a tread portion, a structure described in the following publications can be adopted as the structure of the tread, for example.

JP 2016-203842 A, JP 2009-196527 A, JP 2000-225815 A, JP 2000-264019 A, JP 2003-211921 A, and WO/2014/196409.

The tire of the present disclosure is not particularly limited except that the vulcanized rubber composition of the present disclosure described above is used in a tread portion of the tire, and the tire can be produced according to a conventional method. The gas to be filled in the tire may be an inert gas such as nitrogen, argon or helium, in addition to normal air or air whose oxygen partial pressure has been adjusted.

## EXAMPLES

The following describes the present disclosure in more detail with reference to examples, but the present disclosure is not limited to the following examples.

### (Examples 1 and 2, Comparative Examples 1 to 5)

Samples of rubber composition were prepared by blending and kneading in a conventional manner according to the composition listed in Table 1.

The obtained samples were each subjected to vulcanization treatment and then to the following evaluations (1) and (3).

### (Example 3, Comparative Example 6)

Samples of rubber composition were prepared by blending and kneading in a conventional manner according to the composition listed in Table 2.

The obtained samples were each subjected to vulcanization treatment and then to the following evaluations (1) and (3).

### (Example 4, Comparative Example 7)

Samples of rubber composition were prepared by blending and kneading in a conventional manner according to the composition listed in Table 3.

The obtained samples were each subjected to vulcanization treatment and then to the following evaluations (1) and (3).

### <Evaluation>

### (1) Foaming ratio (pore ratio) of vulcanized rubber

After cutting each sample of vulcanized rubber composition at an arbitrary point, the weight of each cut sample of vulcanized rubber composition was measured using a precision electronic balance, the difference from the theoretical weight ((theoretical specific gravity/measured specific gravity-1)$\times$100) was calculated, and the result was taken as the foaming ratio (pore ratio) (%). The obtained foaming ratio is listed in Tables 1, 2 and 3.

### (2) Wear resistance of vulcanized rubber

The amount of wear of each sample of vulcanized rubber composition was measured with the B method of the sliding wear test of JIS K 7218:1986. The measurement temperature was room temperature (23 °C), and the load was 16 N.

The evaluation was carried out by calculating the reciprocal of the amount of wear. In Table 1, the results of Example 1 and Comparative Example 2 are indicated as an index with the reciprocal of the amount of wear of the vulcanized rubber of Comparative Example 1 being 100, the result of Comparative Example 3 is indicated as an index with the reciprocal of the amount of wear of the vulcanized rubber of Comparative Example 4 being 100, and the result of Example 2 is indicated as an index with the reciprocal of the amount of wear of the vulcanized rubber of Comparative Example 5 being 100. In Table 2, the results are indicated as an index with the reciprocal of the amount of wear of the vulcanized rubber of Comparative Example 6 being 100. In Table 3, the result are indicated as an index with the reciprocal

of the amount of wear of the vulcanized rubber of Comparative Example 7 being 100. A larger index indicates a smaller amount of wear, that is, better wear resistance. The evaluation results are listed in Tables 1, 2 and 3.

(3) On-ice performance of vulcanized rubber

Each sample of vulcanized rubber composition was molded into a test piece having a diameter of 50 mm and a thickness of 10 mm, then the test piece was pressed onto fixed ice and rotated, the generated frictional force was detected by a load cell, and the coefficient of dynamic friction μ was calculated. The measurement temperature was -2 °C, the surface pressure was 12 $kgf/cm^2$, and the rotating circumferential speed of the sample was 20 cm/s.

In Table 1, the evaluation results of Example 1 and Comparative Example 2 are indicated as an index with the coefficient of dynamic friction μ of Comparative Example 1 being 100, the evaluation result of Comparative Example 3 is indicated as an index with the coefficient of dynamic friction μ of Comparative Example 4 being 100, and the evaluation result of Example 2 is indicated as an index with the coefficient of dynamic friction μ of Comparative Example 5 being 100. In Table 2, the evaluation results are indicated as an index with the coefficient of dynamic friction μ of Comparative Example 6 being 100. In Table 3, the results are indicated as an index with the coefficient of dynamic friction μ of Comparative Example 7 being 100. A larger index indicates a larger coefficient of dynamic friction μ, that is, better on-ice performance. The evaluation results are listed in Tables 1, 2 and 3.

[Table 1]

Table 1

| | | Example 1 | Comparative Example 1 | Comparative Example 2 | Comparative Example 3 | Example 2 | Comparative Example 4 | Comparative Example 5 |
|---|---|---|---|---|---|---|---|---|
| Composition | Natural rubber | 50 | 50 | 50 | 50 | 50 | 50 | 50 |
| | Modified SBR *1 | 20 | 20 | 20 | 50 | 50 | 50 | 50 |
| | Butadiene rubber *2 | 30 | 30 | 30 | 0 | 0 | 0 | 0 |
| | Carbon black *3 | 35 | 35 | 35 | 35 | 35 | 35 | 35 |
| | Silica *4 | 35 | 35 | 35 | 35 | 35 | 35 | 35 |
| | Silane coupling agent *5 | 2.8 | 2.8 | 2.8 | 2.8 | 2.8 | 2.8 | 2.8 |
| | Foaming agent *6 | 4.5 | 4.5 | 4.5 | 0 | 4.5 | 0 | 4.5 |
| | Short fiber *7 | 2 | 2 | 2 | 0 | 2 | 0 | 2 |
| | Sorbitan *8 | 1 | - | - | 1 | 1 | 0 | 0 |
| | Sorbitol *9 | - | - | 1 | - | - | - | - |
| | Liquid polymer | 10 | 10 | 10 | 10 | 10 | 10 | 10 |
| | Age resistor | 2 | 2 | 2 | 2 | 2 | 2 | 2 |
| | Sulfur | 1 | 1 | 1 | 1 | 1 | 1 | 1 |
| | Vulcanization accelerator | Total 2 | Total 2 | Total 2 | Total 2 | Total 2 | Total 2 | Total 2 |
| Evaluation | Foaming ratio | 35% | 35% | 35% | 0% | 36% | 0% | 36% |
| | Wear resistance | 108 | 100 | 104 | 98 | 109 | 100 | 100 |
| | On-ice performance | 102 | 100 | 102 | 102 | 100 | 100 | 100 |

[Table 2]

Table 2

| | | Example 3 | Comparative Example 6 |
|---|---|---|---|
| Composition | Natural rubber | 55 | 55 |
| | Butadiene rubber *2 | 45 | 45 |
| | Carbon black *3 | 48 | 48 |
| | Silica *4 | 4 | 4 |
| | Foaming agent *6 | 6.8 | 6.8 |
| | Sorbitan *8 | 1 | - |
| | Age resistor | 1 | 1 |
| | Sulfur | 1 | 1 |
| | Vulcanization accelerator | Total 3 | Total 3 |
| Evaluation | Foaming ratio | 8% | 8% |
| | Wear resistance | 114 | 100 |
| | On-ice performance | 104 | 100 |

[Table 3]

Table 3

| | | Example 4 | Comparative Example 7 |
|---|---|---|---|
| Composition | Natural rubber | 50 | 50 |
| | Butadiene rubber *2 | 30 | 30 |
| | Styrene butadiene rubber *10 | 20 | 20 |
| | Carbon black *3 | 35 | 35 |
| | Silica *4 | 35 | 35 |
| | Sorbitan *8 | 1 | - |
| | Silane coupling agent *5 | 3 | 3 |
| | Short fiber *7 | 2 | 2 |
| | Age resistor | 3.5 | 3.5 |
| | Sodium bicarbonate | 4.5 | 4.5 |
| | Urea | 6.75 | 6.75 |
| | Vulcanization accelerator | 3.5 | 3.5 |
| | Sulfur | 2 | 2 |

(continued)

| | | Example 4 | Comparative Example 7 |
|---|---|---|---|
| Evaluation | Foaming ratio | 8% | 8% |
| | Wear resistance | 121 | 100 |
| | On-ice performance | 106 | 100 |
| *1 Modified styrene-butadiene rubber: N,N-bis-(trimethylsilyl)-aminopropylmethyldiethoxysilane-modified SBR<br>*2 Butadiene rubber: manufactured by Ube Industries, Ltd., "UBEPOL BR150L"<br>*3 Carbon black: SAF grade carbon black<br>*4 Silica: manufactured by Tosoh Silica Corporation, product name "Nipsil AQ"<br>*5 Silane coupling agent: bis(3-triethoxysilylpropyl)polysulfide, manufactured by Shin-Etsu Chemical Co., Ltd.<br>*6 Foaming agent: dinitrosopentamethylenetetramine, manufactured by EIWA CHEMICAL IND. CO.,LTD., "Cellular Z-K"<br>*7 Short fiber: hydrophilic short fiber prepared with the following method | | | |

According to Production Example 3 described in JP 2012-219245 A, two twin-screw extruders were used, 40 parts by mass of polyethylene [manufactured by Japan Polyethylene Corporation, Novatec HJ360 (MFR 5.5, melting point 132 °C)] and 40 parts by mass of ethylene-vinyl alcohol copolymer [manufactured by Kuraray Co., Ltd., EVAL F104B (MFR 4.4, melting point 183 °C)] were added to the hopper, each material was simultaneously extruded from a die outlet to obtain fiber with a conventional method, and the obtained fiber was cut to a length of 2 mm to prepare a hydrophilic short fiber including a core made of ethylene-vinyl alcohol copolymer and a coating layer made of polyethylene formed on the surface of the core.

*8 Sorbitan: sorbitan monostearate, manufactured by Kao Corporation, "RHEODOL AS-10V", number of hydroxyl groups: 3
*9 Sorbitol: manufactured by KANTO CHEMICAL CO.,INC., number of hydroxyl groups: 6
*10 Styrene butadiene rubber: solution-polymerized SBR, manufacture by JSR Corporation, "JSR HPR540"

In Table 1, each of the examples and comparative example contained the same amount of resin, oil, stearic acid, and zinc white, in addition to the listed components.

In Table 2, each of the examples and comparative example contained the same amount stearic acid and zinc white, in addition to the listed components.

In Table 3, each of the examples and comparative example contained the same amount of resin, oil, and zinc white, in addition to the listed components.

The listed blending amount of the vulcanization accelerator is the total blending amount of a plurality of vulcanization accelerators.

According to the results of Table 1, Table 2 and Table 3, it is understood that all of the rubber compositions of Examples achieved both wear resistance and on-ice performance at a high level. On the other hand, the rubber compositions of Comparative Examples had an inferior result in any of the evaluations to those of Examples, and it was difficult to achieve both excellent wear resistance and excellent on-ice performance for the rubber compositions of Comparative Examples.

INDUSTRIAL APPLICABILITY

According to the present disclosure, it is possible to provide a vulcanized rubber composition having good on-ice performance and excellent wear resistance. Further, according to the present disclosure, it is possible to provide a tire with excellent on-ice performance and wear resistance.

REFERENCE SIGNS LIST

10 vulcanized rubber composition
20 pore

## Claims

1. A vulcanized rubber composition obtained by vulcanizing a rubber composition comprising a rubber component containing natural rubber, and a cyclic polyol compound having a hydrocarbyl group, wherein

   the vulcanized rubber composition has a plurality of pores having an average diameter of about 1 $\mu$m to 500 $\mu$m formed in the vulcanized rubber composition, wherein the diameter of the pore is the largest diameter of the pore or, if the pore is not spherical, the maximum distance between any two points on the inner wall of the pore,
   wherein the average diameter of the pores is an average value of the diameters of the pores in the vulcanized rubber composition of the present disclosure, and the average value of the diameters of all pores in one 2.5 mm $\times$ 2.5 mm field of view is obtained by a cross section of the vulcanized rubber composition observed using a "VHX-100" digital microscope manufactured by Keyence Corporation,
   wherein a content of the cyclic polyol compound having a hydrocarbyl group is 0.1 parts by mass to 5 parts by mass with respect to 100 parts by mass of the natural rubber, and
   wherein the vulcanized rubber composition has a pore ratio of 5 % to 45 %.

2. The vulcanized rubber composition according to claim 1, wherein the cyclic polyol compound having a hydrocarbyl group is a cyclic polyol compound having a hydrocarbyl ester group.

3. The vulcanized rubber composition according to claim 1, wherein the cyclic polyol compound having a hydrocarbyl group has two or more hydroxyl groups.

4. The vulcanized rubber composition according to claim 1, wherein the cyclic polyol compound having a hydrocarbyl group is a compound represented by the following formula (1),

   [Chem. 1]

   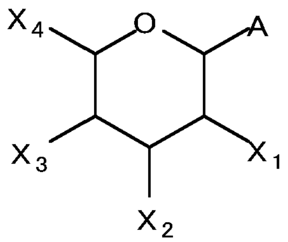

   · · · (1)

   where A is a hydrocarbyl ester group having 6 to 30 carbon atoms or a hydrocarbyl ether group having 6 to 30 carbon atoms, and $X_1$, $X_2$, $X_3$ and $X_4$ are each independently -OH or -R where -R is -H or -$CH_2OH$, provided that at least two of $X_1$, $X_2$, $X_3$ and $X_4$ are -OH.

5. The vulcanized rubber composition according to claim 4, wherein the cyclic polyol compound having a hydrocarbyl group has 12 to 24 carbon atoms in the hydrocarbyl group portion of A in the formula (1).

6. The vulcanized rubber composition according to any one of claims 1 to 5, wherein the cyclic polyol compound having a hydrocarbyl group has a melting point of 40 °C to 100 °C.

7. The vulcanized rubber composition according to any one of claims 1 to 6, wherein a content of the cyclic polyol compound having a hydrocarbyl group is 0.3 parts by mass to 2.5 parts by mass with respect to 100 parts by mass of the natural rubber.

8. The vulcanized rubber composition according to any one of claims 1 to 7, wherein the rubber composition further comprises a filler containing at least one selected from the group consisting of silica and carbon black.

9. The vulcanized rubber composition according to any one of claims 1 to 8, wherein the rubber component further comprises a conjugated diene-based polymer having a functional group.

10. The vulcanized rubber composition according to any one of claims 1 to 9, wherein the rubber composition further

comprises a pore introducing agent.

**11.** The vulcanized rubber composition according to claim 10, wherein the pore introducing agent is at least one selected from the group consisting of a foaming agent, a metal sulfate, a thermally expandable microcapsule, porous cellulose, and a lignin derivative.

**12.** The vulcanized rubber composition according to any one of claims 1 to 11, wherein the rubber composition further comprises a composite fiber.

**13.** The vulcanized rubber composition according to any one of claims 1 to 12, wherein the vulcanized rubber composition has a pore ratio of 15 % or more.

**14.** A tire, using the vulcanized rubber composition according to any one of claims 1 to 13 in a tread portion.

**15.** The tire according to claim 14, wherein the tire is a tire for passenger vehicles or a tire for trucks and buses.

**Patentansprüche**

**1.** Vulkanisierte Kautschukzusammensetzung, die durch Vulkanisieren einer Kautschukzusammensetzung erhalten wird, welche eine Kautschukkomponente, die Naturkautschuk enthält, und eine cyclische Polyolverbindung, die einer Hydrocarbylgruppe aufweist, umfasst, wobei

die vulkanisierte Kautschukzusammensetzung eine Vielzahl von Poren aufweist, die einen durchschnittlichen Durchmesser von etwa 1 μm bis 500 μm aufweisen, die in der vulkanisierten Kautschukzusammensetzung gebildet sind, wobei der Durchmesser der Pore der größte Durchmesser der Pore ist oder, falls die Pore nicht kugelförmig ist, der maximale Abstand zwischen zwei beliebigen Punkten an der Innenwand der Pore ist,
wobei der durchschnittliche Durchmesser der Poren ein Durchschnittswert der Durchmesser der Poren in der vulkanisierten Kautschukzusammensetzung der vorliegenden Offenbarung ist und der Durchschnittswert der Durchmesser aller Poren in einem 2,5 mm × 2,5 mm großen Sichtfeld durch einen Querschnitt der vulkanisierten Kautschukzusammensetzung erhalten wird, der unter Verwendung eines digitalen Mikroskops "VHX-100" der Firma Keyence Corporation beobachtet wird,
wobei ein Gehalt der cyclischen Polyolverbindung, die eine Hydrocarbylgruppe aufweist, 0,1 Masseteile bis 5 Masseteile bezogen auf 100 Masseteile des Naturkautschuks beträgt, und
wobei die vulkanisierte Kautschukzusammensetzung ein Porenverhältnis von 5 % bis 45 % aufweist.

**2.** Vulkanisierte Kautschukzusammensetzung nach Anspruch 1, wobei die cyclische Polyolverbindung, die eine Hydrocarbylgruppe aufweist, eine cyclische Polyolverbindung ist, die eine Hydrocarbylestergruppe aufweist.

**3.** Vulkanisierte Kautschukzusammensetzung nach Anspruch 1, wobei die cyclische Polyolverbindung, die eine Hydrocarbylgruppe aufweist, zwei oder mehr Hydroxylgruppen aufweist.

**4.** Vulkanisierte Kautschukzusammensetzung nach Anspruch 1, wobei die cyclische Polyolverbindung, die eine Hydrocarbylgruppe aufweist, eine Verbindung ist, die durch die folgenden Formel (1) dargestellt ist,

[Chem. 1]

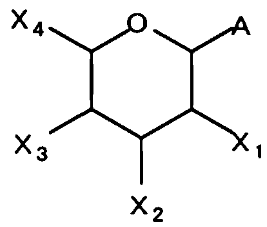

• • • (1)

wobei A eine Hydrocarbylestergruppe ist, die 6 bis 30 Kohlenstoffatome aufweist, oder eine Hydrocarbylestergruppe, die 6 bis 30 Kohlenstoffatome aufweist, und $X_1$, $X_2$, $X_3$ und $X_4$ jeweils unabhängig voneinander -OH oder -R sind,

wobei -R -H oder $-CH_2OH$ ist, vorausgesetzt, dass mindestens zwei von $X_1$, $X_2$, $X_3$ und $X_4$ -OH sind.

5. Vulkanisierte Kautschukzusammensetzung nach Anspruch 4, wobei die cyclische Polyolverbindung, die eine Hydrocarbylgruppe aufweist, 12 bis 24 Kohlenstoffatome im Hydrocarbylgruppenabschnitt von A in der Formel (1) aufweist.

6. Vulkanisierte Kautschukzusammensetzung nach einem der Ansprüche 1 bis 5, wobei die cyclische Polyolverbindung, die eine Hydrocarbylgruppe aufweist, einen Schmelzpunkt von 40 °C bis 100 °C aufweist.

7. Vulkanisierte Kautschukzusammensetzung nach einem der Ansprüche 1 bis 6, wobei ein Gehalt der cyclischen Polyolverbindung, die eine Hydrocarbylgruppe aufweist, 0,3 Masseteile bis 2,5 Masseteile bezogen auf 100 Masseteile des Naturkautschuks beträgt.

8. Vulkanisierte Kautschukzusammensetzung nach einem der Ansprüche 1 bis 7, wobei die Kautschukzusammensetzung weiter einen Füllstoff umfasst, der mindestens eines aus der Gruppe bestehend aus Kieselsäure und Ruß enthält.

9. Vulkanisierte Kautschukzusammensetzung nach einem der Ansprüche 1 bis 8, wobei die Kautschukkomponente weiter ein konjugiertes auf Dien basiertes Polymer umfasst, das eine funktionelle Gruppe aufweist.

10. Vulkanisierte Kautschukzusammensetzung nach einem der Ansprüche 1 bis 9, wobei die Kautschukzusammensetzung weiter ein Poreneinführungsmittel umfasst.

11. Vulkanisierte Kautschukzusammensetzung nach Anspruch 10, wobei das Poreneinführungsmittel mindestens eines ist, das aus der Gruppe bestehend aus einem Schaumbildner, einem Metallsulfat, einer thermisch expandierbaren Mikrokapsel, poröser Cellulose und einem Lignin-Derivat ausgewählt wird.

12. Vulkanisierte Kautschukzusammensetzung nach einem der Ansprüche 1 bis 11, wobei die Kautschukzusammensetzung weiter eine Verbundfaser umfasst.

13. Vulkanisierte Kautschukzusammensetzung nach einem der Ansprüche 1 bis 12, wobei die vulkanisierte Kautschukzusammensetzung ein Porenverhältnis von 15 % oder mehr aufweist.

14. Reifen, der die Kautschukzusammensetzung für Basislauffläche nach einem der Ansprüche 1 bis 13 in einem Laufflächenabschnitt verwendet.

15. Reifen nach Anspruch 14, wobei der Reifen ein Reifen für Personenkraftwagen oder ein Reifen für Lastwagen und Busse ist.

## Revendications

1. Composition de caoutchouc vulcanisée obtenue par vulcanisation d'une composition de caoutchouc comprenant un composant de caoutchouc contenant du caoutchouc naturel et un composé de polyol cyclique présentant un groupe hydrocarbyle, dans laquelle

   la composition de caoutchouc vulcanisée présente une pluralité de pores présentant un diamètre moyen d'environ 1 μm à 500 μm formés dans la composition de caoutchouc vulcanisée, dans laquelle le diamètre du pore est le plus grand diamètre du pore ou, si le pore n'est pas sphérique, la distance maximale entre deux points quelconques de la paroi intérieure du pore,
   dans laquelle le diamètre moyen des pores est une valeur moyenne des diamètres des pores dans la composition de caoutchouc vulcanisée de la présente divulgation, et la valeur moyenne des diamètres de tous les pores dans un champ de vision de 2,5 mm × 2,5 mm est obtenue par une section transversale de la composition de caoutchouc vulcanisée observée à l'aide d'un microscope numérique « VHX-100 » fabriqué par Keyence Corporation,
   dans laquelle la teneur en composé de polyol cyclique présentant un groupe hydrocarbyle est de 0,1 à 5 parties en masse par rapport à 100 parties en masse de caoutchouc naturel, et
   dans laquelle la composition de caoutchouc vulcanisée présente un rapport de pores de 5 % à 45 %.

2. Composition de caoutchouc vulcanisée selon la revendication 1, dans laquelle le composé de polyol cyclique présentant un groupe hydrocarbyle est un composé de polyol cyclique présentant un groupe ester hydrocarbyle.

3. Composition de caoutchouc vulcanisée selon la revendication 1, dans laquelle le composé de polyol cyclique présentant un groupe hydrocarbyle présente deux groupes hydroxyle ou plus.

4. Composition de caoutchouc vulcanisée selon la revendication 1, dans laquelle le composé de polyol cyclique présentant un groupe hydrocarbyle est un composé représenté par la formule suivante (1),

[Formule chimique 1]

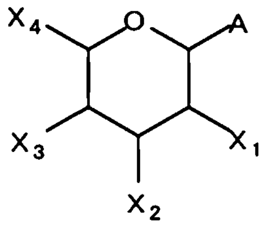

· · · (1)

où A est un groupe ester hydrocarbyle présentant de 6 à 30 atomes de carbone ou un groupe éther hydrocarbyle présentant de 6 à 30 atomes de carbone, et $X_1$, $X_2$, $X_3$ et $X_4$ sont chacun indépendamment -OH ou -R où -R est -H ou $-CH_2OH$, à condition qu'au moins deux de $X_1$, $X_2$, $X_3$ et $X_4$ soient -OH.

5. Composition de caoutchouc vulcanisée selon la revendication 4, dans laquelle le composé de polyol cyclique présentant un groupe hydrocarbyle présente de 12 à 24 atomes de carbone dans la partie groupe hydrocarbyle de A dans la formule (1).

6. Composition de caoutchouc vulcanisée selon l'une quelconque des revendications 1 à 5, dans laquelle le composé de polyol cyclique présentant un groupe hydrocarbyle présente un point de fusion de 40 °C à 100 °C.

7. Composition de caoutchouc vulcanisée selon l'une quelconque des revendications 1 à 6, dans laquelle la teneur en composé de polyol cyclique présentant un groupe hydrocarbyle est de 0,3 partie en masse à 2,5 parties en masse par rapport à 100 parties en masse du caoutchouc naturel.

8. Composition de caoutchouc vulcanisée selon l'une quelconque des revendications 1 à 7, dans laquelle la composition de caoutchouc comprend en outre une charge contenant au moins une charge choisie parmi le groupe constitué de silice et de noir de carbone.

9. Composition de caoutchouc vulcanisée selon l'une quelconque des revendications 1 à 8, dans laquelle le composant de caoutchouc comprend en outre un polymère à base de diène conjugué présentant un groupe fonctionnel.

10. Composition de caoutchouc vulcanisée selon l'une quelconque des revendications 1 à 9, dans laquelle la composition de caoutchouc comprend en outre un agent d'introduction de pores.

11. Composition de caoutchouc vulcanisée selon la revendication 10, dans laquelle l'agent d'introduction de pores est au moins un agent choisi parmi le groupe constitué d'un agent moussant, d'un sulfate métallique, d'une microcapsule thermiquement expansible, d'une cellulose poreuse et d'un dérivé de lignine.

12. Composition de caoutchouc vulcanisée selon l'une quelconque des revendications 1 à 11, dans laquelle la composition de caoutchouc comprend en outre une fibre composite.

13. Composition de caoutchouc vulcanisée selon l'une quelconque des revendications 1 à 12, dans laquelle la composition de caoutchouc vulcanisée présente un rapport de pores de 15 % ou plus.

14. Pneumatique utilisant la composition de caoutchouc vulcanisée selon l'une quelconque des revendications 1 à 13 dans une partie de bande de roulement.

**15.** Pneumatique selon la revendication 14, dans lequel le pneumatique est un pneumatique pour véhicules de tourisme ou un pneumatique pour camions et autobus.

FIG. 1

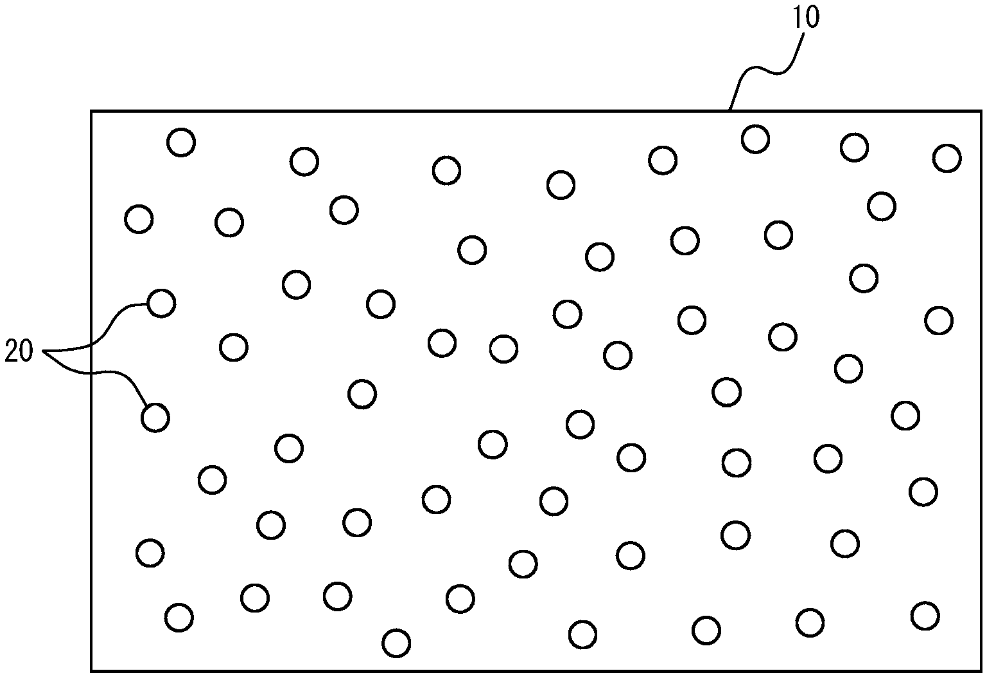


FIG. 2

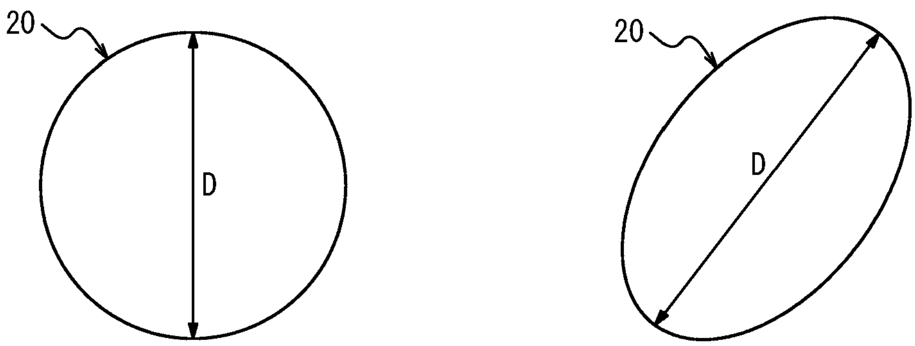

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014172379 A
- EP 3456772 A1
- EP 3495162 A1
- JP 2001323095 A
- JP 2004115284 A
- JP 2016203842 A
- JP 2009196527 A
- JP 2000225815 A
- JP 2000264019 A
- JP 2003211921 A
- WO 2014196409 A
- JP 2012219245 A